# EUROPEAN PATENT APPLICATION

(11) **EP 3 971 833 A1**
(43) Date of publication of application: **23.03.2022**
(21) Application number: 20197528.1
(22) Date of filing: 22.09.2020
(51) Int. Cl.: G06T 11/00

(54) **CONTROL SYSTEM FOR AN AUGMENTED REALITY DEVICE**

(71) Applicant: Koninklijke Philips N.V., 5656 AG Eindhoven (NL)
(72) Inventor: Laute, Niels, 5656 AE Eindhoven (NL); Talgorn, Elise Claude Valentine, 5656 AE Eindhoven (NL)
(74) Representative: Philips Intellectual Property & Standards

(57) **Abstract**

Some embodiments are directed to a control system 400 for an augmented reality device 410. The control system may determine a comparison-situation, at least from a received video stream, in which the user is selecting a physical object matching a reference object. Augmented reality content may be generated that indicate reference content.

## Description

### FIELD OF THE INVENTION

The presently disclosed subject matter relates to a control system for an augmented reality device, a control method for an augmented reality device, and a computer readable medium.

### BACKGROUND OF THE INVENTION

In today's industry some service tasks are increasingly performed by less specialized people. For example, repairing machines is moving away from senior service engineers employed by the company, to multi-brand engineers with less training that are capable of repairing multiple devices for multiple brands. Additionally, hospital staff, such as IT admins or hospital service engineers, may be guided over phone or video call to solve easy-to-fix issues. This shift may result in quicker, more flexible service and/or in cost saving, but it can be difficult for less-experienced users to follow complex manuals and steps. Training staff for installation, repair and maintenance of equipment is expensive as it requires time, travel, and on-site instructions.

US2002/0046368 A1, "System for, and method of, situation-relevant assistance to interaction with the aid of augmented-reality technologies", included herein by reference, discloses a known documentation processing system for situation-relevant assistance to a user.

With the aid of acquisition means, real information is acquired, for example from image content, and is analyzed via analysis means, thereby enabling a real object to be associated with object data stored in documentation data. On the basis of the real information data, for example in the form of a detected object, the additional object data contained in the documentation data may then be selected, particularly in an automatic manner, and made available in situ, for example for service purposes. This enables situation-relevant, rapid access to the data specifically required.

A user is equipped with mobile data goggles fitted with a video camera and a microphone. The data goggles are linked through a radio interface to an augmented-reality system, hereinafter also abbreviated as AR system. The user is able to move freely within a plant for maintenance and service purposes. If maintenance of, or repair to, a particular component has to be carried out, appropriate access to the relevant documentation data is established with the aid of the camera of the data goggles.

To do this data is transmitted to the AR system. Within the AR system, the data obtained from the user are analyzed and individual objects are detected with the aid of analysis means. After a desired object has been found, the corresponding documentation data are transmitted, and are displayed to a user with the aid of visualization means. The overall result is that an analysis is carried out on the basis of the operational situation detected, said analysis forming the basis for the selection of data from the available static information. This results in a situationally appropriate selection of relevant knowledge from up-to-date data sources.

Nevertheless, the known system is not ideal, and opportunities for technically providing support to service personal remain. For example, a disadvantage to the known system is that is has only limited ability to adapt the requirements of the current situation.

### SUMMARY OF THE INVENTION

These and other problems are addressed in a control system for an augmented reality device. For example, the control system, which may also be a control device, may receive from an AR device a video stream showing a field of view of the user that is wearing the AR device. The controller determines that the user is in a comparison-situation in which the user is selecting a physical object matching a reference object. If the reference object, e.g., a device that the user is repairing, is not in his/her field of view, the controller system may obtain reference content depicting the reference object and cause it to appear in the user's field of view through the AR device. This has the advantage that the comparison-situation is easier for the user, since it can visually compare the reference object and the matching physical object.

For example, the controller system may detect that two objects in the real world have to be compared or associated visually. Such a comparison is hard if one of the objects in the comparison is out of view for the user. By showing reference content, e.g., the last relevant frame including relevant parts of the object from the video stream, the user is helped to perform the comparison, e.g., to look for a specific tool or part, etc., that is located away from the reference object. This addresses a concern in the known system. In the known system only documentation related to an object currently in the field of view of the user can be retrieved. However, sometimes information is needed about an object that was previously in the field of view, but not anymore. This problem occurs in particular with comparison situations, e.g., of two real objects or between a real object and a visualization. This may also by useful, when moving away from the object to prepare for a next workflow step, e.g., to pick up a screwdriver; in that case it is better to obtain a screwdriver of the correct type.

The reference content may be isolated from the received video stream, e.g., a still image, or a clip from the video stream. The reference content may instead be pre-determined, e.g., an instruction image obtained from, e.g., a manual or workflow. Even if pre-determined imagery is used, the decision to show it may be the same as indicated above. For example, the controller system may be configured to show the predetermined reference content when the actual reference object disappears from the field of view.

There are many systems in which an embodiment of the controller system is useful. For example, an embodiment may be used to select a physical object such as a tool for manipulating the refence object; the physical object, e.g., the tool may be a screwdriver, for example, and the reference object may be a screw, or a device comprising a screw. The tool may be a hand tool, e.g. a tool configured for manipulation by a human hand, and configured to manipulate a physical object configured to interact with said tool.

Use of the controller system is not restricted to repairing objects, for example, an embodiment may be used in a medical context, e.g., the select a matching, e.g., fitting, medical supply for a body part that is currently out of view; thus the reference object may be a human or animal body part.

In an embodiment, a video processing algorithm may be configured to determine that a reference object is currently not in the field of view and/or the later re-appearance of the reference object in the field of view. Likewise, a video processing algorithm may be used to determine that a physical object which may be matched to the reference object is in view, and/or that it has been selected. A video processing algorithm may also detect if a particular area and/or object is in the field of view. Based on these elements, rules may be constructed configuring the controller system. An example of a rule may be that reference content is shown when 1) the reference object was in the field of view at a first point of time, 2) the reference object is currently not in the field of view and 3) the user is in a predetermined area, or is viewing potentially matching objects.

Such rules can be changed depending on user requirements, which make this set-up particular flexible. For example, in an interesting application, an embodiment may be combined with workflow guidance. In such a system, the controller system shows augmented reality content to a user, to guide him/her through a particular workflow, e.g., repairing a device, e.g., replacing a faulty joystick in a medical remote control device. Part of the workflow may be to select the appropriate tool. Knowledge of the current step of the workflow that is being executed by the user, can be used to determine if a comparison situation is present. Such additional criteria may increase the reliability of the system. The rules may be stored in a computer readable format, such as XML. The computer can parse the rule encoded in the computer readable format and apply them, while an operator of the system may also edit the rules.

The controller system is electronic, for example, a computer, computer system, or the like. The AR device is an electronic device, e.g., a mobile device configured for wearing by a user. Both typically comprise a processor system to execute a sequence of processing instructions. For example, a processor system may comprise one or more microprocessors and memories storing computer instructions for execution by the one or more microprocessors.

An aspect of the invention is a method of controlling an AR device. The method may be executed on a computer. The system and method may be applied in a wide range of practical applications.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

### BRIEF DESCRIPTION OF THE DRAWINGS

Further details, aspects, and embodiments will be described, by way of example, with reference to the drawings. Elements in the figures are illustrated for simplicity and clarity and have not necessarily been drawn to scale. In the Figures, elements which correspond to elements already described may have the same reference numerals. In the drawings,
Fig. 1a schematically shows an example of an embodiment of an object,
Fig. 1b schematically shows an example of an embodiment of an augmented reality view,
Fig. 1c schematically shows an example of an embodiment of an object,
Fig. 1d schematically shows an example of an embodiment of an augmented reality view,
Fig. 2a schematically shows an example of an embodiment of a control system for an augmented reality device,
Fig. 2b schematically shows an example of an embodiment of an augmented reality view,
Fig. 2c schematically shows an example of an embodiment of a control system for an augmented reality device,
Fig. 2d schematically shows an example of an embodiment of an augmented reality view,
Fig. 2e schematically shows an example of an embodiment of an augmented reality view,
Fig. 2f schematically shows an example of an embodiment of an augmented reality view,
Fig. 2g schematically shows an example of an embodiment of an augmented reality view,
Fig. 2h shows a detail from Fig. 2f,
Fig. 3a schematically shows an example of an embodiment of a control system for an augmented reality device,
Fig. 3b schematically shows an example of an embodiment of an augmented reality view,
Fig. 4 schematically shows an example of an embodiment of a control system for an augmented reality device,
Fig. 5 schematically shows an example of an embodiment of a control method for an augmented reality device,
Fig. 6a schematically shows a computer readable medium having a writable part comprising a computer program according to an embodiment,
Fig. 6b schematically shows a representation of a processor system according to an embodiment.

### List of Reference Numerals:

- 100, 101: a view
- 110, 120: a device
- 111: a screw
- 200, 201: an augmented reality view
- 211-213: superimposed content
- 221: a superimposed arrow
- 232: a workflow image
- 302: an augmented reality view
- 303: an augmented reality view
- 310: an object classifier
- 311: a first image or video
- 312: a second image or video
- 321: a reference object classifier
- 322: a physical object classifier
- 323: a workflow identifier
- 331, 332: a superimposed content
- 333: a superimposed content
- 400: a control system
- 410: an augmented reality device
- 412: an augmented reality interface
- 413: a video stream
- 414: an augmented reality signal
- 420: an object identifier
- 421: identified object data
- 430: a classifier
- 431: a workflow storage
- 440: a content generator
- 441: a dynamic content storage
- 442: a static content storage
- 450: a computer network

- 1000: a computer readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### DETAILED DESCRIPTION OF THE EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the presently disclosed subject matter is not limited to the embodiments, as feature described herein or recited in mutually different dependent claims may be combined.

The inventors realized that engineers who are working on equipment, frequently make trips back and forth between the device that they are working on and their tools, e.g., in a tool-box, tool-wall, tool-belt or the like. Sometimes, an engineer may fetch a tool that is not the right one, e.g., a wrench or pliers or Allen keys with the wrong size, or a screwdriver with the wrong shape. For example, Allen keys, also known as hex-keys, range in size from less than 1 mm to more than 40 mm, with anything in between. For example, a screwdriver tip needs to match with the screw head. Screwdriver tip types include: Flat, Phillips, Hex Key (also called an Allen screwdriver), Robertson, and Torx. Using the wrong screwdriver tip will either make screwing impossible, or worse damage the screw. This proliferation of tool types causes inefficiencies and frustration, especially, for less experienced users. Bringing the wrong tool to a job contributes to increased time needed for executing the job, and increases the chance of damage.

Embodiments reduce the need to go back and forth between the object on which an engineer is working and the tool-box by supplying the engineer with a virtual visualization of the object when he/she goes looking for a tool. For example, the visualization may be used to compare part of the worked-on object to another object. A typical example of an embodiment is comparing a device or part thereof with one or more tools for working on the device.

Providing the virtual visualization may advantageously be performed using augmented reality (AR). Augmented reality is primarily experienced via an augmented reality device, such as wearable glass device or a head-mounted device. Augmented reality overlays digital content on top of the real world. AR is not to be confused with virtual reality, since AR enhances the user's experience in the real world rather than replacing it.

For example, an augmented reality device may be used to provide to the engineer working on a job with an image of the device he/she was working on (the reference object), while he is looking for a particular tool (a matching physical object). For example, engineers working in an industry context, such as field service, production, manufacturing and warehousing, find advantage in such a system, as might do-it-yourself persons.

Embodiments may also be applied in other comparison-situations in which a user selects a physical object matching a reference object, which may cause a 'back-and-forth'-behavior between the location of the reference object and the location of the physical object from which a selection needs to be made. For example, a part of a patient's body (e.g., a reference object) may be compared to different sizes of casks (matching physical object) for setting the body-part. Embodiments may be applied by medical staff, e.g., handling patient monitoring systems, IT staff, medical staff performing examination or operations following a protocol.

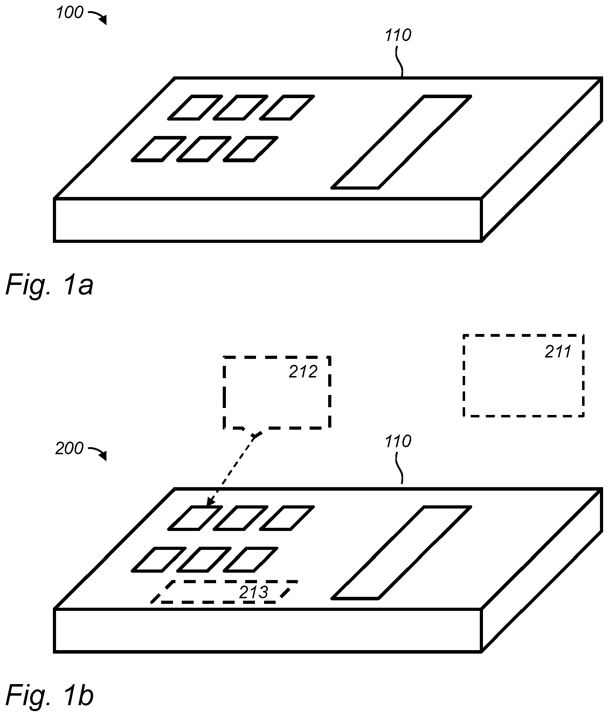

For example, Fig. 1a schematically shows an example of an embodiment of an object 110. In this case, the object is a device 110. For example, the device may be a controller, e.g., to operate a machine or the like. The device may be a remote control. The device may be a medical device, etc. Fig. 1a shows a regular perspective view of the device, as it may be seen by any user, e.g., without an AR device. However, assuming the user is equipped with an augmented reality device, such as AR glasses or a headset, connected to a control system for the augmented reality device, the user may actually see, a view such as depicted in Fig. 1b. Fig. 1b schematically shows an example of an embodiment of an augmented reality view 200. Shown in Fig. 1b is the same view as shown in Fig. 1a but with virtual content superimposed on the view. For example, the user of the AR device, still sees the object 110 but super imposed may be additional information. For example, additional information may be superimposed in a floating manner, e.g., as superimposed content 211. The superimposed content may also be connected to a particular part of object 110. For example, balloon 212 shows superimposed content connected to a key of device 110. Content may also be made to appear as part of the real object, even blending to closely, that it seems part of the real object 110. For example, superimposed content 213 is shown as printed on device 110, and which may appear to be part of the actual device 110, even though, were the AR device to be removed from the user, content 213 would disappear as would content 211 and 212.

The controller may send an augmented reality signal to the AR device that indicates the augmented reality content for superimposing on the field of view of the user.

For example, the controller may be programmed with a workflow to guide the user through servicing object 110, e.g., to repair it. For example, a frequently occurring repair job may be programmed in this manner, so that no specialized people are needed to service the device in this case.

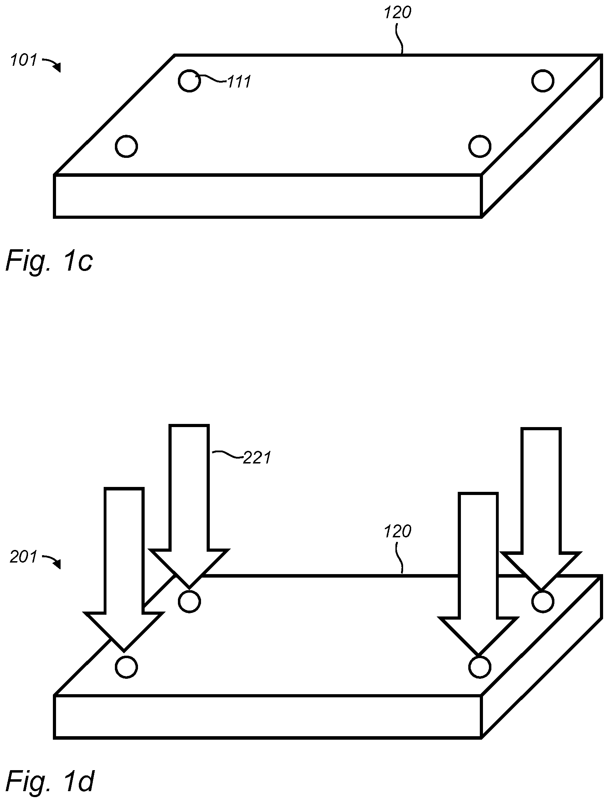

For example, superimposed content 211 may indicate to the user, e.g., graphically or in text, to turn over device 110. For example, holographic arrows may indicate that the device needs to be turned around. For example, the user may be indicated how to replace a joystick of an image-guided therapy device, etc. As first step, the system on the AR headset that the user is wearing may indicate that the main cover needs to be removed. Fig. 1c schematically shows an example of a view of object 120 without an AR device. Device 120 may be device 110 after turning it upside down. Schematically shown in Fig. 1c are four screws: one of the screws is indicated with reference numeral 111. Fig. 1d schematically shows an example of an embodiment of an augmented reality view 201. The same object 120 is shown but superimposed are four arrows that indicate which screws needs to be loosened. One of the four superimposed arrows is labeled with reference numeral 221.

For example, the controller may be configured to generate a sequence of augmented reality content guiding the user, e.g., a so-called work-flow. For example, the AR device, such as an AR headset may be configured to record video showing what the user is seeing and to overlay physical objects with virtual content; for example, to overlay information such as 211-213 and arrows 221. The controller may be configured to keep track of a current workflow step and to give guidance on current and/or upcoming steps in the workflow. Embodiments are particularly useful in the context of an AR assisted guided workflow, but embodiments can also be advantageously applied without.

For example, to remove the cover, the AR may superimpose instructions that explain that the module needs to be disconnected from the table and turned around. To remove the backplate, 4 screws need to be loosened.

In an embodiment, the controller is configured to detect that two objects in the real world need to be compared or associated visually: a reference object and a matched object; or that a visualization, e.g., instructions, e.g., a diagram, needs to be compared to the matched object. For example in case of device 120 in Fig. Id, the workflow may indicate that the screws in object 120 need to be compared to a tool, e.g., the correct type screwdriver. For example, the controller may be configured so that once the reference object, e.g., device 120, which is to be compared is out of view for the user, then a relevant frame showing the reference object may be shown to the user while he/she is looking for the correct tool but the reference object is not in the user's field of view. The relevant frame may be retrieved from the AR's video stream and may be selected based on it showing relevant parts of the reference object. This is useful for the user while looking for a specific tool or part that is located somewhere else.

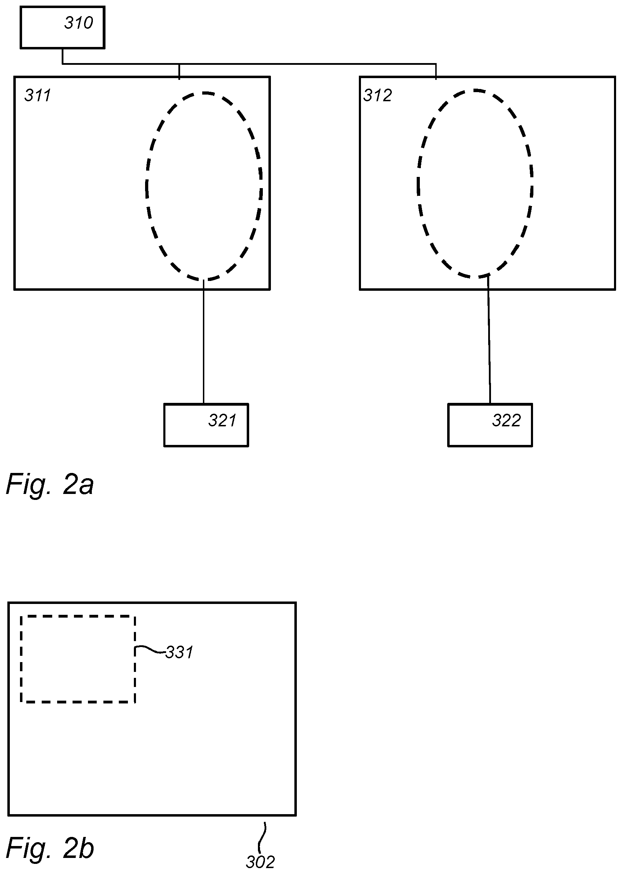

Fig. 2a schematically shows an example of an embodiment of a control system for an augmented reality device. There are various ways to organize the controller so as to detect a comparison situation, e.g., to detect that the user needs to compare an object in his current field of view with an object that is currently not in his field of view. The controller may be configured to apply a video classification algorithm to the received video stream to identify the comparison-situation. In an embodiment, this work may be performed by an object identifier 310, possibly in conjunction with a reference object classifier 321 and a physical object classifier 322. Using these three units is convenient, but not necessary. For example, an object identifier may be incorporated in the classifiers 321 and 322, so that no object identifier 310 is needed. For example, all software may be included in a single software unit.

Shown in Fig. 2a is an object identifier 310. Object identifier 310 is configured to detect objects in an image or video stream and/or to classify the objects. For example, object identifier 310 may comprise a known object identifier, e.g., based on a deep-learning neural network, etc. For example, the object identifier may be obtained using machine learning, e.g., using a data set such as Image-Net, possibly augmented with proprietary images. The proprietary images may include images likely to be encountered in the use of the AR controller, such as images of devices 110 and 120. For example, the object identifier may be applied on a first image or video 311. For example, image 311 may be a still image taken from a video stream received from the AR device. Instead of an image, the object may be detected from a video clip taken from the video stream received from the AR device.

For brevity, we will often assume objects are detected from images taken from the AR video stream, but it is noted that such embodiments can be adapted to work on video clips, e.g., of a few seconds.

A reference object classifier 321 may use the objects detected by object identifier 310 to recognize a reference object. For example, reference object classifier 321 may compare the output of the object classifier 310 with a predetermined list of reference objects. For example, reference object classifier 321 may compare the output of the object classifier 310 with a reference object that is expected in a particular part of a workflow. For example, if the controller is configured to execute a workflow for servicing device 110, then a first step may be to ensure that the device is turned with its screws up. A second step may be to remove the screws. For example, this step may expect a device 120.

The controller may also comprise a physical object classifier 322, e.g., to detect objects for matching. For example, in a second image 312, the physical object classifier 322 may detect objects for matching with the reference object detected in the first image 311. For example, in case of Fig. 1d the physical objects may be tools. Physical object classifier 322 may be configured to detect if the correct tool has been selected. Physical object classifier 322 may also be configured to detect if a tool has been selected, but not the correct tool. For example, detecting tool selection may be done by detecting a hand holding the tool. For example, detecting tool selection may be detecting that other tools, except the detected tool, disappear from view.

The controller may be configured to determine a comparison-situation in which the user is selecting a physical object matching a reference object. For example, the controller may determine a comparison-situation from the objects detected in the video stream received from the AR device; for example, if first screws are detected and next screwdrivers than a comparison situation may be assumed. For example, a controller may be configured to detect a comparison situation from a workflow. For example, if a workflow is interrupted to retrieve tools, it may be assumed the tools are needed to execute the current workflow step, e.g., to remove screws.

In a comparison situation, the controller may be configured to generate an augmented reality content indicating the reference content. If the controller determines that the reference object is currently not in the field of view, e.g., because the user went to retrieve the tool than the augmented reality content comprising the reference content may be shown to the user, e.g., superimposed in this AR device. For example, this may be done when the reference object detected in image 311 disappears.

For example, in an embodiment, the controller may be configured to apply a video processing algorithm to determine that a reference object is currently not in the field of view, and to display an image of the reference object in the AR display. The controller may be configured with rules for displaying, e.g., rules that indicate when displaying of the reference object such cease. For example, if a physical object has been selected, or the re-appearance of the reference object in the field of view is identified, then depiction of the reference object may cease. Display of the reference object may also depend on the identification of a predetermined area, e.g., a tool area, or an object detected in the field of view, e.g., a tool object.

Interestingly, the controller system may be configured to make a reference content obtained from a video stream at a first instance available through an AR device at a second, later, instance.

It can happen that the AR device is for some reason currently unavailable. For example, a first user may be joined by a second user who doesn't have an AR device. In that case the AR content may be send to another mobile device with a screen, e.g., a phone or a tablet. The AR content may be then be shown as mobile AR.

Fig. 2b schematically shows an example of an embodiment of an augmented reality view 302. Shown in Fig. 2b is superimposed content 331. Augmented reality view 302 is shown when the reference object disappears from view. Superimposed content 331 shows a reference image of the reference object. The reference image may be a reference video.

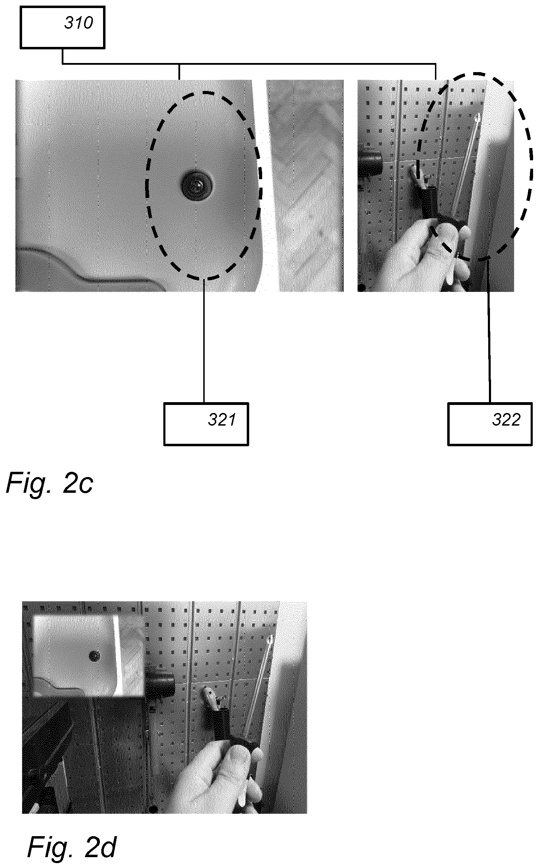

Figs. 2c and 2d schematically show an example of an embodiment of a control system for an augmented reality device and an augmented reality view. Figs. 2c and 2d are similar to Figs. 2a and 2b but exemplified with image data taken from a particular embodiment. It is noted that the features discussed below may be applied in the context of Figs. 2a and 2b as well.

Fig. 2c shows an object classifier 310 configured to detect objects in a video stream received from an AR device. In the left picture, object classifier 310 detects a device, and a screw head comprised in the device. The reference object classifier 321 is configured to recognize this detected object as a reference object. This may be because, reference object classifier 321 is following a workflow and based on that currently expects the reference object to appear in view. Reference object classifier 321 may also be configured more generally that some objects are potential reference objects; For example, a screw head coming in view, in particular if its prominence is above a threshold, may be considered a potential reference object.

At a later point in time, object classifier 310 may detect a matching object or potential matching object, in this case a screwdriver. Physical object classifier 322 may be configured to recognize this as a potential match with the reference object found earlier, or the potential reference object found earlier. An image of the reference object is shown through the AR device, e.g., as a floating image. An embodiment of the view that may be generated is shown in Fig. 2d. Reference object classifier 321 and/or physical object classifier 322 may be configured to show the reference object earlier, e.g., as soon as the reference object disappears from view, or as soon as tools appear in view.

For example, Figs. 2c and 2d may be encountered when repairing a medical remote control unit, e.g., to replace a faulty joystick. Embodiments can also be applied outside repairing devices, e.g., maintenance of devices, e.g., to service a machine, e.g., a medical machine, e.g., an X-ray device.

A screwdriver is an example of a physical object that can be matched to a reference object, e.g., to a screw. In general, a physical object may be a tool for manipulating the refence object. For example, a nail as reference object may be matched to a hammer as a physical object. Other examples of a reference object may be a device, e.g., medical device, an inanimate object, etc. The reference object and matching physical object may be of a plug and socket type, e.g., two artefacts that are design to cooperate. The reference object may be a body part of a human or animal body. In the latter case the matching object may be a medical supply that comes in different sizes, e.g., an absorbent pad, an incontinence product, a stockinette sleeve, etc.

Fig. 2d schematically shows an example of an embodiment of an augmented reality view. Shown in Fig. 2d is that a holographic snapshot of the reference object, e.g., the device, appears in view. For example, the controller may be configured to show the snapshot when the user looks away from the reference object, e.g., to pick up a tool. Once the user selects the right tool and returns to the reference object, the snapshot may disappear. There may be other criteria for removing the snapshot, e.g., if viewing duration is exceeded, if a user command overrides it, etc.

There may also be different or additional criteria for showing the snapshot. For example, the controller may be configured to show the reference content only while the field of view shows a predetermined area, e.g., a toolbox or tool wall. For example, in Fig. 2d, a tool wall is visible. The controller may detect this, e.g., using a tool-wall detection, or by localizing the user, etc. The detection of a tool area may be a factor in deciding if there is a comparison situation. For example, a comparison situation may be detected, if the user is viewing a tool area, such as a tool wall, and a potential reference object was visible within a past time-frame, e.g., the past 5 minutes. In an embodiment, the tool may be obtained from a tool-belt. In case of a tool-belt, a head movement may be used as an additional indication that the user is looking at the tool-belt, and thus may be selecting a tool. The head movement may be that head is inclined downwards, e.g., past a threshold. This may be detected using an accelerometer. A workflow may provide another or additional criterion for detecting a comparison situation; For example, the workflow may comprise a step for selecting a tool.

The controller, e.g., physical object classifier 322, may recognize that the user is currently not holding the correct screwdriver to perform this task. The user walks back to his toolbox at the other side of the room - the system recognizes that the reference object, e.g., the device on which the user is working, is no longer in the user's field of view. The controller may analyze the video stream that was previously captured and select a videoframe for showing in the AR device to the user. The user is helped in selecting the correct tool. The video frame may be displayed as an AR r and may float before the user so he/she can quickly glance at it from time to time while selecting the right tool. If the selected tool is already the correct tool, the controller may remove the snapshot from view.

For example, in an embodiment, the controller determines that
- a first object involved in a current step of a workflow is no longer in the user's field of view,
- the workflow step is not completed, and/or
- a second physical object is in the field of view that has to be matched visually, e.g., compared, to the reference object one
then, the controller may display a snapshot (or a model) of the first object in the user's AR headset, e.g., as a thumbnail. When the first object comes back in the field of view of the user, the snapshot may disappear. Instead or in addition to a snapshot, other information may be displayed, e.g., a diagram or model of the reference object.

Detecting a comparison situation may comprise the use of image analysis of the video stream to identify the viewed objects, and of a system to match the identified objects to a protocol and/or to other objects in the video feed.

Matching, comparing or associating two objects may relate, e.g., to:
- Similar objects: e.g., an object and its visual representation
- Explanatory objects: e.g., an object and the instructions related to it in a protocol
- Complementary objects: e.g. an object and another object to perform an action on it, such as, e.g., a screw and a screwdriver, e.g., plug and socket objects.

In an embodiment, the reference object is a physical object that was previously depicted in the received video stream, e.g., a device on which the user is working, etc. In that case, the reference content may be obtained from the video stream that was previously received from the AR device; For example, detecting the image or video clip to display in the AR device may comprise
- identifying the reference object in the received video stream, and
- obtaining from the video stream an image and/or video clip depicting the reference object and including the image and/or video clip in the augmented reality content.

Typically, there are multiple frames or clips that depict the reference object. Various criteria may be used to make the selection, e.g., of a reference content that would be more helpful than other choices. The reference content may be shown to the user while he/she is selecting the correct tool or part to use, so it is preferable that the reference is of suitable quality to assist in the selection.

For example, the controller may be configured to assess a visibility of one or more relevant elements of reference object. For example, if screws need to be removed, then reference content that shows the screw is preferable. This information may be obtained from a workflow. For example, if the workflow comprises for a workflow step, to remove screws, a reference content may be selected that shows the screws. If a fuse needs to be replaced, a reference content showing the fuse is preferred, etc.

Other criteria may relate to the image quality. For example, an image with a higher image quality. Quality may be expressed numerically and optimized, or may be required to be over a threshold. For example, image quality may relate to assessing lighting conditions, and/or sharpness, and/or motion blur. The visibility may also be impacted by the zoom level. For a detail, such as a screw, it is preferred that a cut-out is taken, and zoomed-in on the detail. Again, these criteria could be encoded in a workflow or could be encoded as general rules, etc.

For example, in an embodiment, the rules behind the selection of the frame may include:
a. Visibility of all relevant elements (e.g. screws).
b. Lighting conditions and sharpness
c. Orientation of the relevant elements
d. Zoom level - zooming into specific.

The decision may be made based on visibility of all elements that are relevant for the tool selection and image quality. A zoom level may be chosen that shows more of the relevant elements and less of the not relevant elements, e.g., of background, or of parts of the device that do not currently need modification.

Orientation may be important, e.g., not upside down. If needed orientation can be corrected, at least in part, e.g., by turning the image. When looking at an object upside down, which may happen in a scenario where the engineer would bend over to look at something, the frame could automatically be rotated when not looking at it.

The controller may be configured to store which orientation of an object is relevant to the user, e.g., for a particular workflow step, e.g., a particular instruction in a protocol manual. For example, if a screw has to be removed on one side of the device, the controller may display a snapshot or a representation of this side of the object in the reference content.

Additional information may be presented in an AR device, including additional information displayed in known systems; for example, workflow steps, manual pages, etc.

As discussed above, embodiments typically make use of video and/or image analyzing algorithms, possibly together with an expert system. For example, a rule-based expert system may encode rules for deciding when a reference object needs to be displayed, what the reference object is, when to cease displaying it, and so on. Image recognition algorithms may be used to provide input to the expert system, e.g., identification of the objects in view. For example, the recognition algorithms may be object recognition algorithms comprising, e.g., a neural network, e.g., a deep convolution neural network. Although, this combination has produced good results, it is not necessary. For example, instead of an object recognition using neural network other solutions may be used instead or in addition. For example, in an embodiment, potential reference objects and/or the physical objects may comprise a tag, e.g., an RF tag, e.g., an NFC tag, or an optical tag, e.g., a QR tag. The tag may identify the object or the type of the object. For example, a physical object such as a screwdriver may comprise a tag that identifies the screwdriver or at least its type. Tag-based recognition has the advantage of high reliability. Moreover, an RF type tag may be used to recognize a comparison situation; For example, if a potential reference object was seen, followed by receiving multiple tag IDs that are associated with a tool, then it may be determined that the user went to pick up a tool. Tags can be used together with visual recognition, e.g., visual recognition of objects may be restricted to objects for which an ID is received or seen. Restricting the recognition to fewer objects, greatly improves the visual accuracy; on the other hand, the visual recognition can be used to identify elements, which are not easily determined from tag data, e.g., whether or on a tool was picked up, which side up a device is turned, etc. For example, the controller may comprise an interface to receive an identity signal from one or more tags, e.g., an RF wireless interface.

Embodiments as described herein have the advantage that it is easier for less-experienced users to follow a complex, technical protocol, e.g., that relates to fixing hardware and/or software issues for devices and systems. Moreover, the amount of time spent looking for the right tool to perform a specific action within the workflow is reduced. Consumers, in particular less experienced users, with a lack of knowledge to identify which specific tool is required to perform a certain action are assisted in performing a task. For medical professionals it is easier to compare a body part of the patient to an image of a body part, or instructions on an action to perform on a body. For example, when performing a diagnosis, a doctor may have to compare a body part of a patient in front of him/her to a similar body part with a known illness.

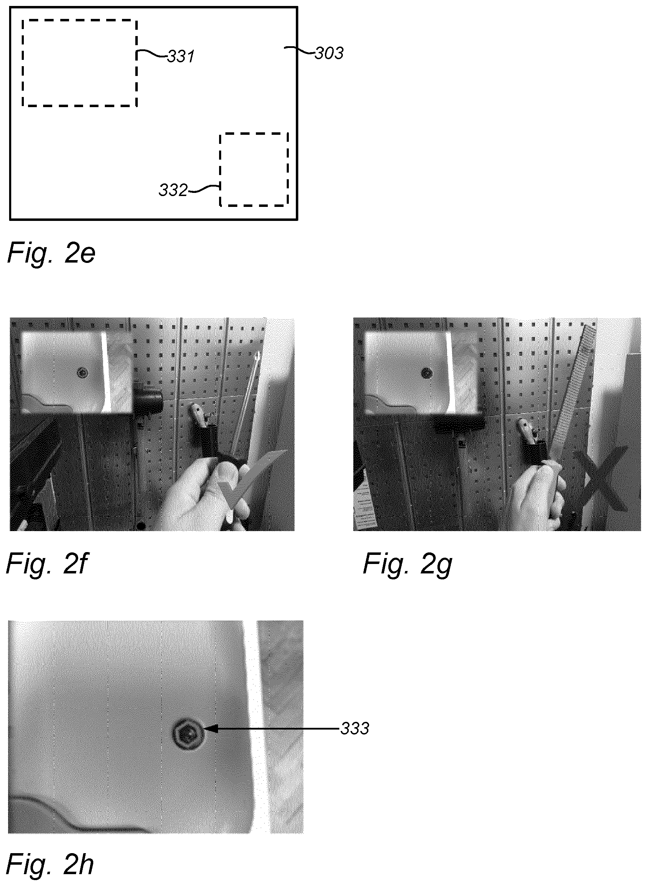

Fig. 2e schematically shows an example of an embodiment of an augmented reality view 303. In augmented reality view 303 multiple contents are superimposed, shown are: a superimposed content 331 and a superimposed content 332. The superimposed content 331 may be used to show an image of a reference object, e.g., as in an embodiment. The superimposed content 332 may, e.g., be used to show additional information relating to a tool selection. For example, the superimposed content 332 may give information that indicates if the selected tool is expected to match the reference object. Figs. 2f and 2g schematically show an example of an embodiment of an augmented reality view. In Fig. 2f, the correct screwdriver has been selected; The additional information superimposed in the bottom right corner indicates that there is a correct match. In Fig. 2g, an incorrect tool has been selected; The additional information superimposed in the bottom right corner indicates that there is not a correct match.

For example, the controller may be configured to analyze the video frame to detect the screw size and/or type. Object recognition or tag identification may be used to verify that the corresponding tool, e.g., a screwdriver of a compatible size and type has been selected. When picking up a certain tool, e.g., screwdriver, the controller may detect if these are compatible.

Additional information may also be included in the reference content. For example, Fig. 2h shows a detail from Fig. 2f, with additional superimposed content 333. The superimposed content 333 may be used to indicate the fit between tool and reference object. For example, in Fig. 2f, the additional superimposed content may be a green band around the screw. In Fig. 2g, the additional superimposed content may be a red band around the screw

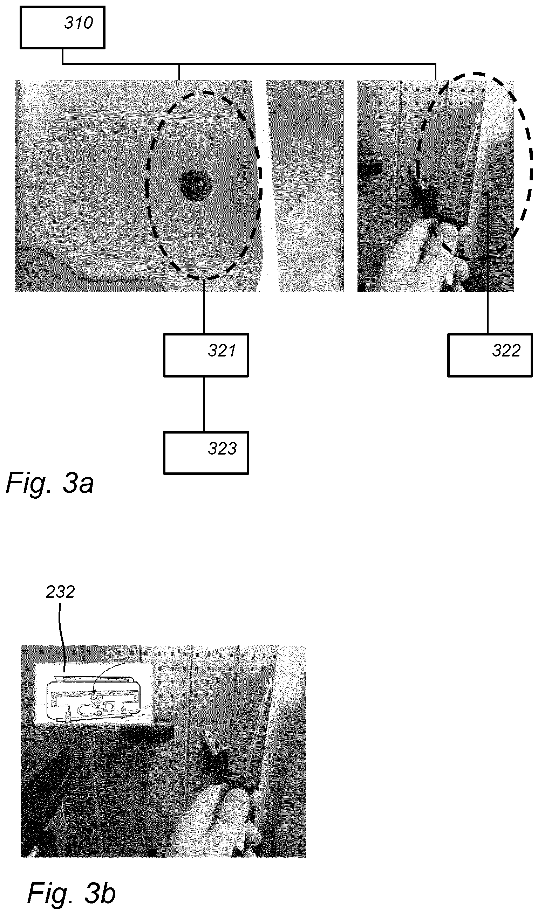

Fig. 3a schematically shows an example of an embodiment of a control system for an augmented reality device. In an embodiment related Fig. 3a, an additional element is introduced: a workflow identifier 323. Workflow identifier 323 may be configured to retrieve information related to a current workflow step. For example, workflow identifier 323 may retrieve a diagram or the like of the reference object. For example, Fig. 3b schematically shows an example of an embodiment of an augmented reality view in which the reference content 232 is not obtained from the video stream received from the AR device, but is a pre-stored image retrieved from a static storage. For example, the reference content may comprise drawings, e.g., from an instruction-manual, instead of a snapshot of the reference object to provide additional information such as instructional text and other annotations. For example, the controller may comprise or may connect to a storage comprising service manuals, technical drawings and/or other information that can be used to instruct the user of the upcoming workflow steps. Even if pre-stored reference content is used, the embodiment may still infer situational clues from the video stream on when to display the reference content. For example, a comparison situation may be detected; for example, the reference content may be displayed when the reference object disappears from the field of view; for example, displaying the reference content may cease if the reference object re-appears, or if a tool has been selected, etc.

Recognizing relevant objects from a video stream that are part of a workflow step, e.g., the medical device, may use known video analyzing techniques.

Advantageously, the controller may also be configured to guide the user through a workflow, e.g., a workflow designed to perform common repairs. For example, the controller may be configured to generate a sequence of augmented reality content guiding the user. In an embodiment, at least one of the generated augmented reality content in the sequence comprises the reference object. For example, a user may be instructed in a first sequence of steps to perform a first set of action on a device, e.g., turn the device over to expose the screws, etc. In a second sequence, the user may be instructed to remove the screws. At this point, the user may retrieve a tool, and may be assisted with reference content from the device.

Determining whether the user transitions into a next step of the work-flow may be done by applying a video processing algorithm to determine if a previous step has been completed. Determining whether the user transitions into a next step of the work-flow, may also be done by receiving a user command that indicates that a workflow step is completed.

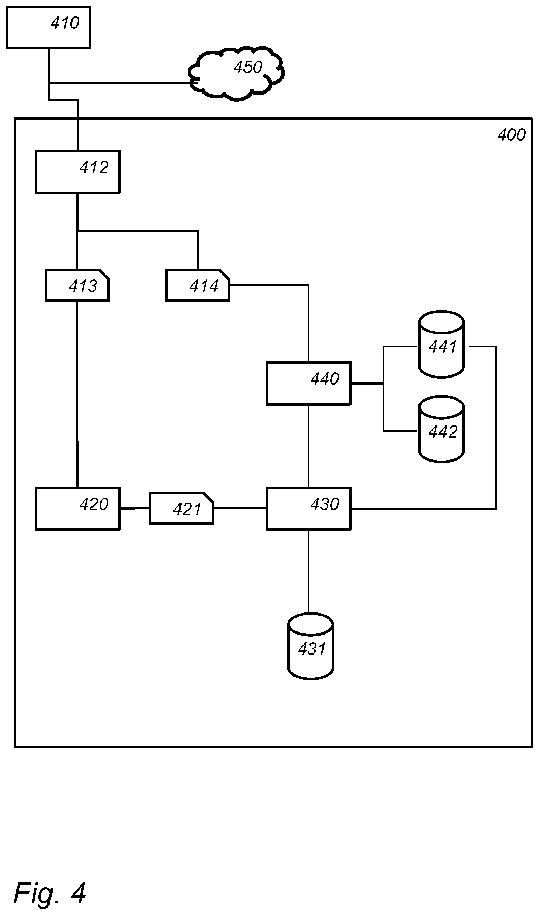

Fig. 4 schematically shows an example of an embodiment of a control system 400 for an augmented reality device 410. Controller system 400 may be implemented as a single device, but may also be implemented in a distributed fashion. For example, all or part of the controller system 400 may be implemented in the cloud, so that not all parts of system 400 need to be located at the same geographical location.

AR device 410 comprises a camera for recording a field of view of the user and sending the video stream to control system 400. The AR device may also comprise a microphone, e.g., to receive voice commands of the user; but a microphone is not necessary. AR device 410 also comprises a visualization means to display AR content superimposed on his/her field of view. For example, AR device 410 may be AR glasses or an AR headset.

Controller system 400 comprises an augmented reality interface 412 for interfacing with AR device 410, e.g., receiving a video stream 413 acquired in the augmented reality device of the user's field of view. Interface 412 may also be configured to send an augmented reality signal to the augmented reality device. The augmented reality signal may indicate to the AR device augmented reality content for superimposing on the field of view of the user. Controller system 400 may be comprised in the AR device 410, though typically, the two are separate and the AR device is to the controller system 400.

Video stream 413 may be analyzed by an object identifier 420, e.g., such as object identifier 310. The output of object identifier 420 may be identified-object data 421. For example, identified-object data 421 may comprise data indicating which types of objects have been identified in the video stream 413. For example, object identifier 420 may comprise a neural network based object identifier. A classifier 430 may be configured to determine based on the identified objects, or at least on the identified objects, whether or not a reference image should be displayed. For example, classifier 430 may be rule based, e.g., may comprise an expert system, etc.

Classifier 430 may be connected to a workflow storage 431. Workflow storage 431 may comprise information describing a workflow. For example, a workflow may indicate which actions need to be performed in which order. The workflow storage 431 is optional, but workflow guidance makes the detection of a comparison situation more reliable. Controller 400 may also use workflow storage 431 to display workflow guidance through AR device 410.

The output of classifier 430 may be data that indicates that a particular image is a potential reference object. Classifier 430 may do this by comparing an object with a list of object identifiers or object types. For example, classifier 430 may regard any device, or any screw, etc., as a potential reference object. Classifier 430 may recognize a potential reference object based on the workflow sequence. For example, any object detected when an upcoming workflow is a comparison step may be regarded as a potential reference object. A combination of the above two approaches may also be used. For example, classifier 430 may regard a detected device, or screw, etc., that fits in an upcoming comparison step as a potential reference object. Images depicted the reference object may be stored in a dynamic content storage 441.

Classifier 430 may send data to a content generator 440 indicating that the user is in a comparison situation. The data may also indicate the likely reference object that is currently relevant. Content generator 440 may retrieve from dynamic content storage 441 an image or a clip of the reference object. That reference content may be originally obtained from the AR device 410. Instead of storing only potential reference objects in the dynamic content storage, one may buffer the video stream so that a reference content can be obtained from the buffer, e.g., in case a comparison situation is encountered.

Content generator 440 may instead or in addition retrieve reference content from a static content storage 442, e.g., an image or a clip of the reference object. That reference content may be predetermined, e.g., obtained from a manual or the like.

Predetermined data has the advantage that it may be of high quality. Moreover, it may be schematic and easier to understand. On the other hand, a snapshot or the like is particular to the current situation. Content generator 440 is configured to generate an augmented reality signal 414. For example, an augmented reality signal 414 may adhere to some predetermined format for AR devices. For example, augmented reality signal 414 may conform to an AR device standard. For example, augmented reality signal 414 may comprise data indicating location in the field of view, translucency of the content, the content data itself, etc.

Communication between controller system 400 and AR device 410 may be through computer network 450. The various parts of system 400 may communicate with each other through an internal communication means, e.g., a bus, an API, etc., and/or through a computer network, e.g., computer network 450. The computer network may be an internet, an intranet, a LAN, a WLAN, etc. Computer network 450 may be the Internet. The computer network may be wholly or partly wired, and/or wholly or partly wireless. For example, the computer network may comprise Ethernet connections. For example, the computer network may comprise wireless connections, such as Wi-Fi, ZigBee, and the like. The parts of system 400 may comprise a connection interface which is arranged to communicate with other parts of system 400 as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna. For example, the parts of system 400 may comprise communication interface 410 respectively. In system 400, the communication interface may be used to receive video data and/or to send AR data. Internal data such an object identification data may be transferred in system 400 in digital form, possibly over network 450, or over another digital communication medium.

The execution of system 400 may be implemented in a processor circuit, examples of which are shown herein. Fig. 4 shows functional units that may be functional units of the processor circuit. For example, Fig. 4 may be used as a blueprint of a possible functional organization of the processor circuit. The processor circuit is not shown separate from the units in Fig. 4. For example, the functional units shown in Fig. 4 may be wholly or partially implemented in computer instructions that are stored at system 400, e.g., in an electronic memory of system 400, and are executable by one or more microprocessors of system 400. In hybrid embodiments, functional units are implemented partially in hardware, e.g., as coprocessors, e.g., neural network coprocessors, and partially in software stored and executed on system 400.

Storage may be implemented as an electronic memory, say a flash memory, or magnetic memory, say hard disk or the like, or optical memory, e.g., a DVD.

Typically, AR device 410, system 400 and/or its parts may each comprise a microprocessor which executes appropriate software stored at the therewith; for example, that software may have been downloaded and/or stored in a corresponding memory, e.g., a volatile memory such as RAM or a non-volatile memory such as Flash. Alternatively, AR device 410 and system 400 may, in whole or in part, be implemented in programmable logic, e.g., as field-programmable gate array (FPGA). They may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc.

A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only.

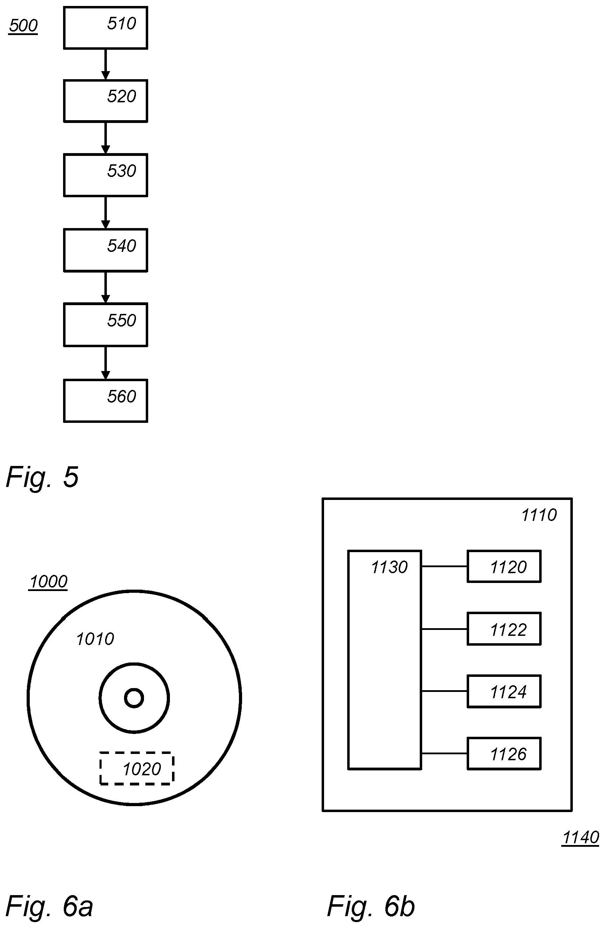

Fig. 5 schematically shows an example of an embodiment of a control method 500 for an augmented reality device. Method 500 may be computer implemented. Control method 500 may comprise
- receiving (510) from a mobile augmented reality device a video stream (413) acquired in the augmented reality device of a field of view of a user of the augmented reality device,
- determining (520) at least from the received video a comparison-situation in which the user is selecting a physical object matching a reference object,
- determining (530) that the reference object is currently not in the field of view,
- obtaining (540) reference content depicting the reference object,
- generating (550) an augmented reality content indicating the reference content
- sending (560) to the augmented reality device an augmented reality signal indicating the augmented reality content for superimposing on the field of view of the user.

Many different ways of executing the method are possible, as will be apparent to a person skilled in the art. For example, the steps can be performed in the shown order, but the order of the steps may also be varied or some steps may be executed in parallel. Moreover, in between steps other method steps may be inserted. The inserted steps may represent refinements of the method such as described herein, or may be unrelated to the method. Moreover, a given step may not have finished completely before a next step is started.

Embodiments of the method may be executed using software, which comprises instructions for causing a processor system to perform method 500. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

Fig. 6a shows a computer readable medium 1000 having a writable part 1010 comprising a computer program 1020, the computer program 1020 comprising instructions for causing a processor system to perform a control method according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said control method.

Fig. 6b shows in a schematic representation of a processor system 1140 according to an embodiment of a control system. The processor system comprises one or more integrated circuits 1110. The architecture of the one or more integrated circuits 1110 is schematically shown in Fig. 6b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the controller system may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

The processor 1120 may be any hardware device capable of executing instructions stored in a memory or storage or is otherwise capable of processing data. As such, the processor may include a microprocessor, field programmable gate array (FPGA), application-specific integrated circuit (ASIC), or other similar devices.

While device 1100 is shown as including one of each described component, the various components may be duplicated in various embodiments. For example, the processor 1120 may include multiple microprocessors that are configured to independently execute the methods described herein or are configured to perform steps or subroutines of the methods described herein such that the multiple processors cooperate to achieve the functionality described herein. Further, where the device 1100 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of' when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A control system (400) for an augmented reality device (410), the control system comprising
- an augmented reality interface (412) configured to receive from a mobile augmented reality device a video stream (413) acquired in the augmented reality device of a field of view of a user of the augmented reality device, and configured to send to the augmented reality device an augmented reality signal indicating an augmented reality content for superimposing on the field of view of the user,
- a processor subsystem configured to
- determine at least from the received video a comparison-situation in which the user is selecting a physical object matching a reference object,
- determine that the reference object is currently not in the field of view,
- obtaining reference content depicting the reference object,
- generate an augmented reality content indicating the reference content and sending the augmented reality content to the augmented reality device.

2. A control system as in Claim 1, wherein the processor subsystem is configured to apply a video classification algorithm to the received video stream to identify the comparison-situation.

3. A control system as in any one of the preceding claims, wherein the reference object is a physical object that was previously depicted in the received video stream, obtaining the reference content comprises
- identifying the reference object in the received video stream,
- obtaining from the video stream an image and/or video clip depicting the reference object and including the image and/or video clip in the augmented reality content.

4. A control system as in Claim 3, wherein identifying the reference object in the received video stream comprises
- assessing a visibility of one or more relevant elements of reference object,
and/or
- assessing lighting conditions, and/or sharpness, and/or
- determining a zoom level.

5. A control system as in any one of the preceding claims, wherein
- the physical object is a tool for manipulating the refence object, and/or
- the physical object is a hand tool, e.g. a type of screwdriver, and the refence object is a physical object configured to interact with said tool, e.g., a type of screw,
- the reference object is a device, e.g., medical device, or inanimate object, and/or
- the reference object is a body part of a human or animal body.

6. A control system as in any one of the preceding claims, wherein the reference object is an instruction image, e.g., from a manual or workflow

7. A control system as in any one of the preceding claims, wherein the processor subsystem is configured to generate a sequence of augmented reality content guiding the user, at least one of the augmented reality content in the sequence comprising the reference object.

8. A control system as in Claim 7, wherein the processor subsystem is configured to apply a video processing algorithm to determine a transition of the user to a next step in a workflow, and in response to generate a next augmented reality content of the sequence of augmented reality content.

9. A control system as in any one of the preceding claims, wherein the processor subsystem is configured to apply a video processing algorithm to
- determine the reference object is currently not in the field of view and/or
- the physical object has been selected, depiction of the reference object ceasing in response thereto,
- identify a re-appearance of the reference object in the field of view, depiction of the reference object ceasing in response thereto,
- identify a predetermined area and/or object in the field of view.

10. A control system as in any one of the preceding claims, wherein the reference content is shown only while the field of view shows a predetermined area, e.g., a toolbox or tool wall.

11. A control system as in any one of the preceding claims, comprising an interface to receive an identity signal from a tag on at least the reference object and/or the physical object.

12. A control system as in any one of the preceding claims, wherein the augmented reality signal is configured to indicate floating contents.

13. A control method (500) for an augmented reality device (510), the control method comprising
- receiving (510) from a mobile augmented reality device a video stream (413) acquired in the augmented reality device of a field of view of a user of the augmented reality device,
- determining (520) at least from the received video a comparison-situation in which the user is selecting a physical object matching a reference object,
- determining (530) that the reference object is currently not in the field of view,
- obtaining (540) reference content depicting the reference object,
- generating (550) an augmented reality content indicating the reference content
- sending (560) to the augmented reality device an augmented reality signal indicating the augmented reality content for superimposing on the field of view of the user.

14. A transitory or non-transitory computer readable medium (1000) comprising data (1020) representing instructions, which when executed by a processor system, cause the processor system to perform the method according to claim 13.
